# EUROPEAN PATENT SPECIFICATION

(11) **EP 1 935 752 B1**
(45) Date of publication and mention of the grant of the patent: **15.09.2010**
(21) Application number: 07123353.0
(22) Date of filing: 17.12.2007
(51) Int. Cl.: B62D 1/10, B62D 1/04, E02F 9/20

(54) **Working Machine**
Arbeitsmaschine
Machine de travail

(30) Priority: 22.12.2006 GB 0625764
(43) Date of publication of application: 25.06.2008
(73) Proprietor: J.C. BAMFORD EXCAVATORS LIMITED, Uttoxeter Staffordshire ST14 5JP (GB)
(72) Inventor: Brown, Christopher Michael, Ashbourne, Derbyshire DE6 1LH (GB); Brooks, Graham Mark, Stoke on Trent, Staffordshire ST10 1TF (GB)
(74) Representative: Lucking, David John

(56) References cited:
- EP-A- 1 256 542
- EP-A- 1 686 039
- DE-A1-102004 040 975
- US-A- 4 776 750
- US-A- 5 046 312
- US-A1- 2003 067 147
- US-A1- 2006 089 773

## Description

This invention relates to a working machine having a control apparatus, the machine including a steerable, power driven ground engaging structure and a hydraulic actuator operated working part for performing working operations. Examples of machines to which the present invention may be applied are loading machines and excavating machines and tractors, which each include a transmission for driving the machine over the ground.

Most typically, steering of the ground engaging structure of such a machine is performed using a steering wheel, which will be understood by those skilled in the art to include any control which includes a continuous, or a plurality of separate, circular, or near circular circumferentially extending manually graspable outer rim part or parts, which is or are connected by one or more radially extending members to a centre part where the steering wheel is operatively connected to a steering column which in use is turned to effect steering of the machine. Thus the steering wheel need not include an exactly circular outer rim part.

It is known to provide such a steering wheel with a central hub which is rotatable with the steering wheel, or the hub may even be an integral part of the steering wheel, and for the hub to carry one or more control devices for controlling various services. However, where the control devices are switches and the like, it is complex and costly to provide for electrical connections between the rotatable hub and the remainder of the machine.

DE 102004040975 discloses a working machine according to the preamble of claim 1.

Conventionally for a working machine such as a loading and/or excavating machine or a tractor, it is known for joystick or the like type controls to be provided for controlling power operated auxiliary services of the machine, such as for example a linear hydraulic actuator for lifting a loading or excavating, working, arm of the machine, controlled by a hydraulic control valve. However, operation of such joystick controls requires an operator to release the steering wheel with at least one hand which is undesirable where the auxiliary service is to be controlled simultaneously with driving and steering of the machine..

According to the invention we provide a working machine which includes a steerable, power driven ground engaging structure and a hydraulic actuator operated working part for performing working operations, and a control apparatus which includes a mounting, a steering device for providing steering to the ground engaging structure, and a manually operable control device for controlling operation of a hydraulic control valve which in use selectively provides pressurised hydraulic fluid to the at least one actuator to operate the working part, the steering device including a steering wheel which includes an outer rim part which is rotatable relative to the mounting, within an envelope of rotation, about an axis, to turn a steering column which is coaxial or substantially co-axial with the axis of rotation of the steering wheel, the steering column being operatively connected to the ground engaging structure to effect steering of the machine when turned, and the control apparatus may further include a hub structure which is located within or substantially within the boundary of rotation of the outer rim part of the steering wheel, and a controller, the hub structure being fixed relative to the mounting and the manually operable control device being provided by the hub structure and in use when operated, providing a signal to the controller which responds by operating the hydraulic control valve.

Thus the machine may be provided with a control apparatus by which the operator may effect steering of the machine and may operate the at least one hydraulic actuator without having to release the steering wheel, and moreover, because the hub structure which carries the auxiliary control device is fixed with respect to the mounting, a considerably simplified and less costly solution is provided compared to known control apparatus with rotatable hubs provided on vehicles.

The hub structure may include a display device, such as a display screen, for displaying the operational status of a function of the machine, such as for example, the status of an engine of the machine, or the operational state of the at least one hydraulic actuator or of the working part being controlled. The information displayed by the display device may be operator selectable.

The working arm may be pivotally mounted at an inner end, to a frame of the machine, for movement relative to the frame by a hydraulic actuator, the working arm including a plurality of relatively moveable parts which are relatively moveable by one or more further hydraulic actuators, and the machine including a working implement mounted at an outer end of the working arm and being moveable relative to the working arm by one or more yet further hydraulic actuators; one of the hydraulic actuators being the at least one actuator controlled by the manually operable control device provided by the hub structure of the control apparatus.

The hub structure may provide a plurality of manually operable control devices each of which is operable when actuated to provide a signal to the controller which responds by operating a respective hydraulic control valve which then provides pressurised hydraulic fluid to a respective hydraulic actuator of the working arm and working implement,

If desired, the functions of the plurality of the manually operable control devices may be re-configurable, for example, using a processor controlled menu feature of the display device where this is provided, to enable the control devices to control alternative hydraulic actuators.

Preferably the or each manually operable control device provided by the hub structure is operable by the operator's fingers and/or hand whilst the operator is holding the outer rim part of the steering wheel, although the hub structure may include additional control devices which to operate, require the operator to release the outer rim part of the steering wheel. However preferably such additional control devices are not generally required to be operated whilst the machine is in motion such that simultaneous steering is not likely to be required.

The steering wheel preferably includes a single continuous outer rim part which is circular or substantially circular, and at least one radially extending member which connects the outer part to a centre part which is operatively connected to the steering column of the machine. At least for a machine which must comply with road regulations, the steering column may be mechanically operatively connected to a steering structure of the ground engaging structure. For example the steering column may extend to a steering box which, via direct mechanical transmission, usually with power operated assistance, effects steering of wheels of the ground engaging structure when the steering wheel is rotated. Preferably though the steering column extends to a steering structure which includes a hydraulic valve, which provides pressurised hydraulic fluid to one or more hydraulic actuators to effect steering.

In each case rotation of the steering wheel causes rotation of the steering column. Whereas the centre part of the steering wheel may be mechanically fast with the steering column, desirably the steering device includes a sun gear carried fast with the steering column, and the centre part of the steering wheel includes a ring gear which when rotated, turns the sun gear and hence the steering column, by rotating one or more planet gears which are provided between and mesh with the sun and ring gears. Thus the steering column will be rotated in a direction opposite to that which the steering wheel is rotated about its axis of rotation, and at a relative rotational speed suitable for input to the hydraulic valve where provided, depending upon the ratios of the ring, sun and planet gearing.

In the case of a machine having rear ground engaging wheels which are steerable, to effect steering of the machine, these would need to turn oppositely to the direction of rotation of the steering wheel to effect steering when the machine is travelling in a forwards direction and thus with the arrangement described, the steering column may mechanically be connected direct to the steerable rear ground engaging wheels, or to a suitably configured hydraulic valve, but in the case of a machine having front ground engaging wheels which are steerable, these would need to turn in the same direction to the direction of rotation of the steering wheel to effect steering, which may be arranged by suitable configuration of hydraulic circuitry of the machine. In the case of a machine in which both the front and rear ground engaging wheels may be turned to effect steering, again hydraulic circuitry of the machine would need to be configured appropriately.

In a preferred construction, the hub structure includes an axially outer part which lies substantially alongside the circumferentially extending outer rim part of the steering wheel, and an axially inner part which is affixed to the mounting of the control apparatus, with the centre part of the steering wheel between the axially inner and outer hub parts. The axially outer hub part may be configured such that one or more control devices provided on the axially outer hub part, are closely adjacent to the circumferentially extending rotatable outer rim part of the steering wheel.

Desirably, the steering wheel includes a manually engageable spinner device which may be used to rotate the steering wheel as an alternative to the operator holding and rotating the outer rim part of the steering wheel, the spinner device including a manually graspable part which is rotatable relative to the steering wheel about a spinner axis parallel to but spaced from the axis of rotation of the steering wheel.

The spinner device may include at least one spinner mounted operator control device. To avoid any requirement for electrical connections between the spinner mounted operator control device and any remotely located controlled service, desirably the spinner device includes a wireless transmission function for transmitting signals to the controller when the manually operable auxiliary service control device is actuated, whereby the remote service may be controlled without being electrically connected to the spinner mounted operator control device or devices.

Desirably the spinner device is dismountable from the remainder of the steering wheel, e.g. to enable the spinner device to be connected to an electrical charging device whereby a battery of the spinner device may be recharged. Desirably the steering wheel provides alternative mounting positions for the spinner device, e.g. so that the steering wheel may be reconfigured for right or left handed spinner device operation.

If desired, the manually operable control device or devices provided by the hub structure, when actuated, signal the controller via a wireless transmission function to control the or a respective, hydraulic actuator.

Embodiments of the invention will now be described with reference to the accompanying drawings in which:-
FIGURE 1 is an illustrative side view of a working machine in accordance with the present invention;
FIGURE 2 is a plan illustrative view of a control apparatus of the machine of figure 1;
FIGURE 3 is a perspective and exploded illustrative view of part of the control apparatus of figure 2;
FIGURE 4 is a perspective partially assembled illustrative view of the part of the control apparatus of figure 3;
FIGURE 5 is an illustrative view of the control apparatus of figures 2 to 4, a controller and hydraulic control valves.

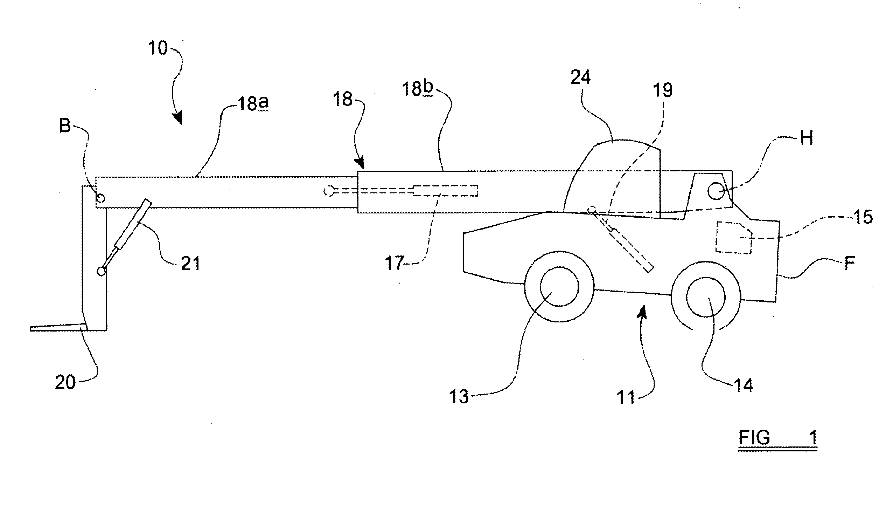

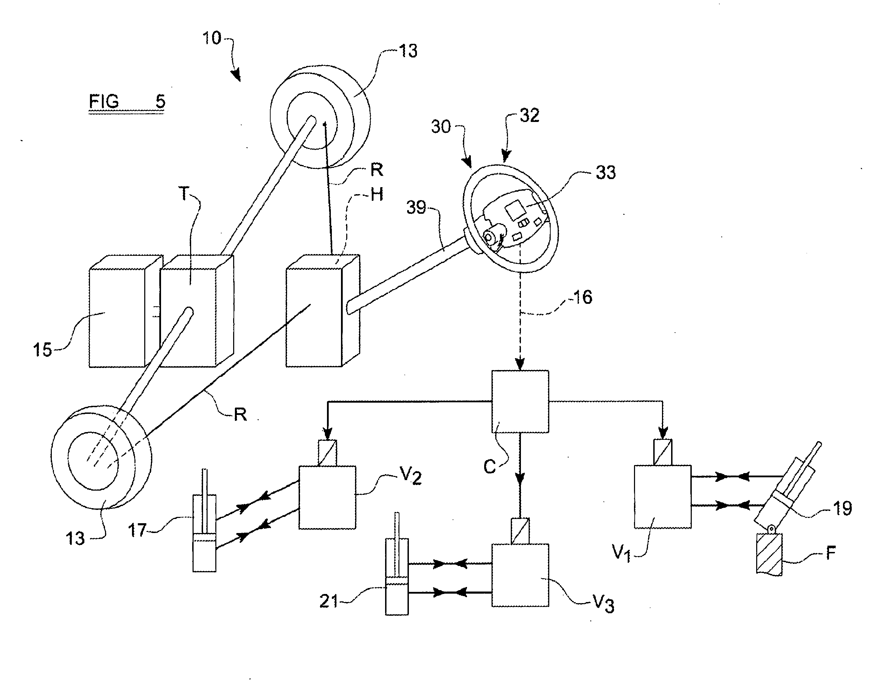

Referring to figures 1 and 5 of the drawings, a machine 10 to which the present invention is applied is in this example, a loading machine having a ground engaging structure 11 provided by two pairs of ground engaging wheels 13, 14, one pair of wheels 13 in this example, being front, steerable wheels, and the other pair of wheels 14 being rear wheels (which may or may not alternatively or additionally to the front wheels be steerable), with all four wheels 13, 14 being power drivable from an engine 15 via a suitable transmission T, which may be a mechanical transmission, or of the hydrostatic kind.

The machine 10 includes a working arm which in this example is a loading arm 18 pivotally mounted to a frame F of the machine 10 for pivoting movement about a generally horizontal axis H. Such a loading arm 18 usually includes a plurality of telescopic parts or stages, e.g. two stages 18a, 18b in this example, whereby the arm 18 is linearly extendible and retractable, by means of one or more e.g. internal or external hydraulic actuators 17, and the arm 18 being raisable and lowerable by one or more lifting hydraulically operated actuators 19. A loading forks 20 or other working implement is provided at an outer end of the loading arm 18, and may be manipulated about a pivot axis B by another one or more hydraulically operated actuators 21, to crowd and dump.

The machine 10 is driven, steered, and the various auxiliary services, i.e. the hydraulic actuator(s) 17 internally of the loading arm 18 and the hydraulic actuators 19, 21 etc. are controlled from within an operator's cab.

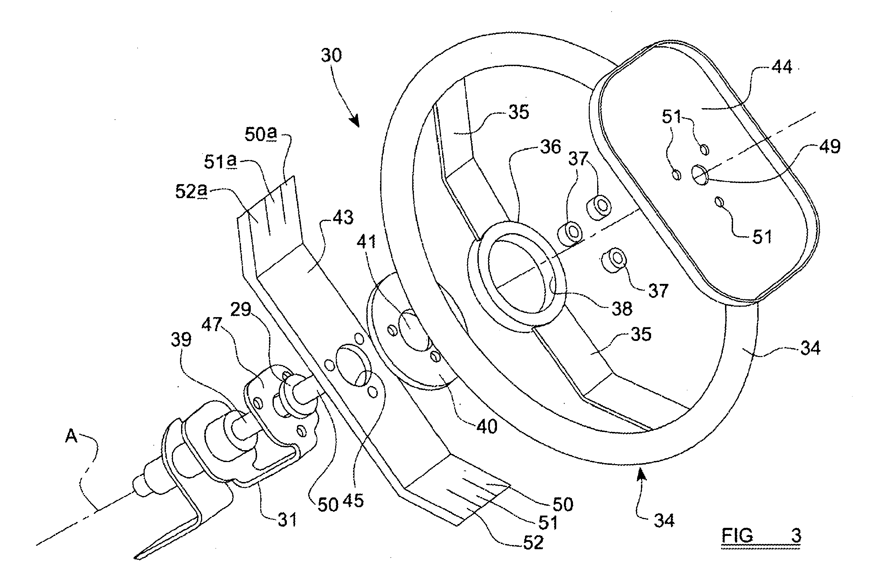

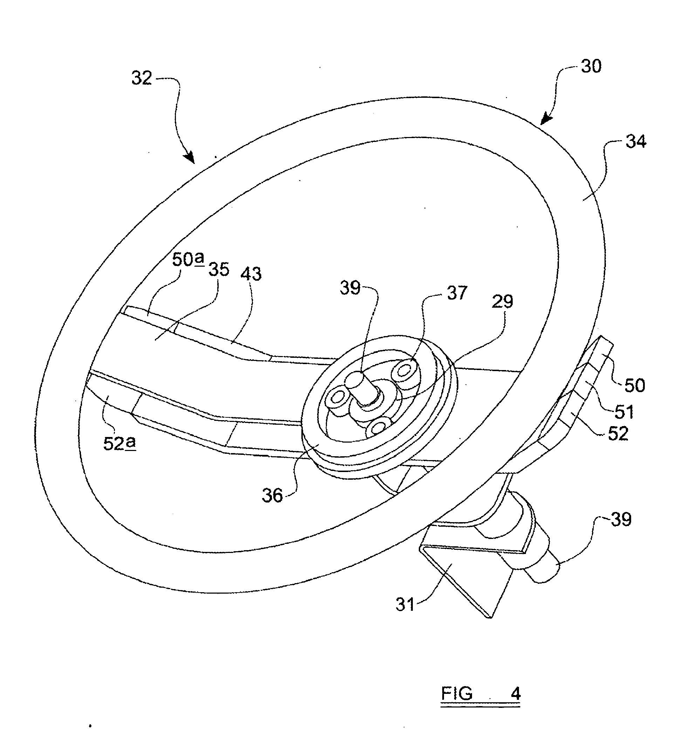

Referring to figures 3 and 4, the control apparatus 30 includes a steering device which includes a steering wheel 32, and a plurality of manually operable control devices provided by a hub structure 33, mounted by a mounting 31 which is fixed relative to the frame F of the machine 10.

The steering wheel 32 includes a continuous outer rim part 34 which in this example is substantially circular, which is connected by one or a plurality of radially extending members 35, to a centre part 36.

The steering wheel 32 is rotatable by an operator, about an axis A, which has the effect of turning a steering column 39 of the machine 10. In this example, the steering column 39 extends to a hydraulic control valve H, which is operative to provide pressurised hydraulic fluid via a suitable hydraulic circuit, to one or more steering actuators (not shown) which are effective to turn the front wheels 13 to steer the machine 10 via steering rods R.

The steering wheel 32 is operatively connected to the steering column 39 as follows.

The steering column 39 is mounted by the control apparatus mounting 31 to rotate relative thereto, and the column 39 extends axially to within the centre part 36 of the steering wheel 32. A sun gear 29 of the steering device is fast with the steering column 39, and meshes with each of a plurality, three in this example, planet gears 37 which also mesh with an internal ring gear 38 provided by the centre part 36. The planet gears 37 are mounted by a plate 40 which has a central opening 41 large enough for the sun gear 29 to extend through, the plate 40 being secured as described below, to the mounting 31.

By virtue of the meshing sun 29, planet 37 and the ring gears 38, it will be appreciated that as the steering wheel 32 is rotated about is axis A, the steering column 39 will be turned about axis A in an opposite direction and possibly at a differential rotational speed to the turning speed of the outer rim part 34 of the steering wheel 32, depending upon the gearing ratios. The hydraulic circuitry of the steering hydraulic valve H thus needs to be configured so that, in this example, the front wheels 13 of the machine 10 turn in the same direction to the direction in which the steering wheel 32 is turned about its axis A.

The hub structure 33 of the control apparatus 30 includes an axially inner part shown at 43, and an axially outer part shown at 44. The outer rim part 34 of the steering wheel 32 when rotated, defines a boundary of rotation. The hub structure 33 is wholly contained, or at least substantially wholly contained within the boundary of rotation of the rim part 34.

The axially inner part 43 extends radially of steering axis A, with an opening 45 large enough for the sun gear 29 to extend through. The axially inner part 43 lies axially outwardly of and adjacent to a transversely extending receiving part 47 of the mounting 31. The plate 40 which mounts the planet gears 37 lies axially outwardly of and adjacent to the axially inner hub part 43. The centre part 36 and ring gear 38 lie axially outwardly of and adjacent to the plate 40 mounting the planet gears 37, and the axially outer hub part 44, lies axially outwardly of and adjacent to the centre part 36 of the steering wheel 32.

The axially outer part 44 of the hub structure 33 has an opening 49 to receive an end of the steering column 39, and three radially outer openings 51 to receive fasteners (not seen). The fasteners extend though and secure, the axially outer hub part 44, through the centre part 36 of the steering wheel 32, through and mounting the planet gears 37, through openings in the plate 40, and openings in the axially inner hub part 43, to the receiving part 47 of the mounting 31 where the fasteners are secured. The steering wheel 32 is thus able to rotate about its steering axis A, with suitable bearings being provided between the centre part 36 and each of the plate 40 which mounts the planet gears 37, and between the axially outer hub part 44 and the centre part 36 of the steering wheel 32.

Figure 4 shows the assembled control apparatus 30 but with the axially outer hub part 44 not present, for clarity.

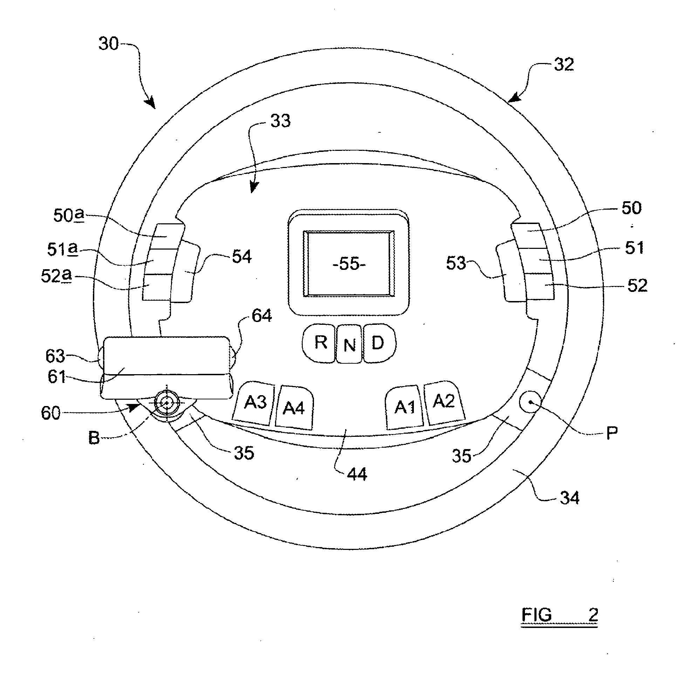

Referring specifically to figure 2, the hub structure 33 carries various manually operable control devices as will now be described. It will be appreciated that the configuration of the axially outer hub part 44 shown in figure 3 is purely illustrative. Figure 2 shows the outer hub part 44 as it may appear in practice.

The hub structure 33, by virtue of being fixed as described above to the mounting 31, will not rotate as the steering wheel 32 is rotated, but the various manually operable control devices for the hydraulic actuators and other auxiliary services, or at least those which it may be required to operate whilst the machine 10 is in motion and being steered, are accessible by the operator's hand or fingers, without the operator needing to remove either of his hands from the outer rim part 34 of the steering wheel 32.

In this example, the axially inner hub part 43 carries three bi-directional manually operable control devices 50, 51, 52 adjacent to the outer rim part 34 of the steering wheels 32 so that the operator may simultaneously operate the control devices 50, 51, 52 and effect steering. The control devices 50, 51 and 52 are configurable to control and operate hydraulic actuators 17, 19, 21 etc. of the loading arm 18 and the working implement 20.

Thus the control devices 50, 51, 52 may be configured so that pushing down of the device 50 for example, causes the arm 18 to lower, and pulling of the device 50 causes the arm 18 to be raised, by appropriate operation of the lifting actuator 19, and so that pushing down of the control device 51 causes the loading arm 18 to extend and pulling of the device 51 causes the loading arm 18 to retract by appropriate operation of the internal actuator(s) 17, and pushing down of control device 52 causes the working implement 20 to crowd, whilst pulling of the device 52 causes the working implement to dump, by appropriate operation of the actuator 21.

The control devices 50, 51, 52 are electrically connected by electrical cabling 16 (see figure 5) to a machine controller C which is in turn, electrically connected to respective electrically operated hydraulic control valves V1, V2 V3, to achieve the loading arm 18/working implement 20 functions described.

Of course the configurations of the control devices 50, 51, 52 i.e. which control device operates which hydraulic actuator 17, 39, 21, is purely exemplary, and by virtue of the electrical system and machine controller C, alternative configurations to achieve operation of different actuators 17, 19, 21 by different manually operable control devices 50, 51, 52 may be arranged as desired, by reconfiguring the control devices.

The hub structure 33 in this example further includes on the radially outer part 44, three additional control devices which in this example are button switches "D" for selecting forward drive, "N" for selecting neutral drive, and "R" for selecting reverse drive. These switches D, R and N are electrically connected to the controller C of the machine 10 to control other auxiliary services namely a mechanical transmission controller or hydraulic valves of a hydrostatic transmission, to control the machine 10 to be driven, forwardly or in reverse by operating the appropriate switch D or R (typically in combination with a foot pedal control), or the transmission may be put in neutral by selecting switch N.

These additional control devices D, R and N may require for operation, the operator to remove a hand from the outer rim part 34 of the steering wheel 32, but as a change of driving mode is desirably only selected when the machine 10 is stationary, steering is not simultaneously required.

The axially outer hub part 44 also has other additional manually operable control devices being a pair of selector button switches A1 and A2 which may be configured to enable alternative auxiliary services to be selected for control by the control devices 50, 51, 52 which are carried by the radially inner hub part 43, and a further pair of selector button switches A3, A4 which could be configured to operate an auxiliary service such as a rapid steering function, for example to turn the forward steerable wheels 13 a quarter turn in one or other direction.

There are shown mounted on the axially inner hiub part 43, three alternative control devices 50a, 51 a, and 52a which may be configured like the devices 50, 51, 52 already described to operate and control the loading arm 18 and the working implement 20, alternatively or additionally to the control devices 50, 51, 52, for example for use by a left handed machine operator.

It can be seen from figure 2 that the axially outer hub part 44 also carries further control devices 53, 54 adjacent the respective control devices 50, 51, 52 and alternative control devices 50a, 51 a, 52a, which further control devices 53, 54 may be used to control other features of one or more of the auxiliary services described, such as for example the flow rate of pressurised hydraulic fluid used for operating the or one of the auxiliary services.

The axially outer hub part 44 includes a display screen 55 which displays information relating to operating functions of the machine 10. For example, the display screen 55 may be configured to display information relating to the machine engine 15 functionality, such as engine speed, oil pressure status and so on, or the display screen 55 may be configured to display information relating to the drive status, or auxiliary services functions status of the machine 10.

What is displayed may be selectable by the operator, operating display screen controls (not shown), or the screen 55 may be touch sensitive to enable selected information to be displayed.

It is envisaged that the display screen 55 may be used to configure the various control devices 50, 51, 52 and alternative control devices 50a, 51a, 52a, the further control devices i.e. the switch buttons D, R and N and the further control devices 53, 54, as well as the selection buttons A1, A2, A3 and A4, to operate/control different machine functions, for example by the display screen 55 displaying a selection menu.

In each case it will be appreciated that because the hub structure 33 is fixed relative to the mounting 31 and hence to a frame of the machine 10, that providing electrical connections to the various control devices 50, 51, 52 or 50a, 51 a, 52a, additional control devices D, R and N, further control devices 53, 54 and selector switches A1, A2, and to the display screen 55 does not require connections to an electrical system of the machine 10 via the rotatable steering wheel 32.

In figure 2, it can be seen that the steering wheel 32 is provided with a spinner device 60, so that a machine operator can rotate the steering wheel 32 with one handed operation. The spinner device 60 includes a manually graspable part 61 which is rotatable relative to the remainder of the steering wheel 32 about a spinner axis B which is parallel to but spaced from steering wheel axis A. The spinner device 60 is shown engaged with a radially extending steering wheel member 35 in a position most suitable for operation by a right handed driver. However the steering wheel 32 may provide an alternative spinner device mounting position P as desired, so that the spinner device 60 may be selectively engaged with the steering wheel 32 in another position more suitable for a left handed machine operator.

The spinner device 60 includes a pair of spinner manually operable control devices being button switches 63, 64 which again may be configurable to control any desired auxiliary service, such as in this example, forward or reverse driving direction, so that an operator can change driving direction when using the spinner device 60 for steering.

Preferably, to avoid the need for any electrical connections from the rotatable spinner device 60 via the rotatable steering wheel 32 to e.g. an electrical system of the machine 10, the spinner device 60 incorporates a wireless transmission function whereby a remote hydraulic actuator or other auxiliary service (which may be a hydraulically or electrically powered service), may be controlled without being electrically connected to the spinner device controls 63, 64. This is achieved by actuation of a spinner control device 63, 64, resulting in appropriate signals being transmitted to the controller C which thus includes a receiver for such wireless signals.

If desired to avoid the need for the electrical cabling between the hub structure 33 and the controller C, at least, if not all the cabling 16 may be replaced by a wireless transmission function so that operation of the or any of the manually operable control devices provided by the hub structure 33, results in appropriate signals being issued to the controller C which responds by operating an appropriate hydraulic control valve V1, V2, V3 and hence a hydraulic actuator, or another e.g. electrically powered service.

The spinner device 60 may incorporate a battery to power the wireless transmission function, which battery may be recharged or replaced whilst the spinner device 60 is removed from the remainder of the steering wheel 32. Where the hub structure 33 includes a wireless transmission function, the hub structure 33 may include a battery, or this may be powered by power provided via cabling.

It will be appreciated that the examples given as to the nature of the machine 10 with which the present invention may be employed, the layout of the configurable controls etc. and the mechanical connection between the steering wheel 32 and the steering column 39 are purely exemplary and other configurations are possible.

In the examples described, the steering column 39 is connected to the steerable ground engaging structure 11 through a hydraulic steering valve H, but in another arrangement there may be a steering bax by means of which the steering column 39 is mechanically directly connected to to the wheels 13 and/or 14, with power assistance as required. This would make the machine compatible with regulations applicable for machines and vehicles to be driven on public roads. For a purely off road machine, or in territories where such road regulations do not apply, the steering column 39 may operate an electrically operated steering system.

## Claims

1. A working machine (10) which includes a steerable, power driven ground engaging structure (13,14) and a control apparatus (30) which includes a mounting (31), a. steering device (32) for providing steering to the ground engaging structure (13,14), the steering device (32) including a steering wheel which includes an outer rim part (34) which is rotatable relative to the mounting (31), within an envelope of rotation, about an axis (A), to turn a steering column (39) which is coaxial or substantially co-axial with the axis of rotation of the steering wheel (32), the steering column (39) being operatively connected to the ground engaging structure (13,14) to effect steering of the machine (10) when turned, and the control apparatus (30) further including a hub structure (33) which is located within or substantially within the envelope of rotation of the outer rim part (34) of the steering wheel (32) **characterized by** a hydraulic actuator operated working arm (18) for performing working operations, a manually operable control device (50,51,52) for controlling operation of a hydraulic control valve (V,V₂,V₃) which in use selectively provides pressurised hydraulic fluid to the at least one actuator (17,19,21) to operate the working arm (18), and a controller (C), the hub structure (33) being fixed relative to the mounting (31) and the manually operable control device (50,51,52) being provided by the hub structure (33) and in use when operated, providing a signal to the controller (C) which responds by operating the hydraulic control valve (V,V₂,V₃).

2. A machine according to claim 1 **characterised in that** the hub structure includes a display device (55) for displaying the operational status of a function of the machine (10), the information displayed by the display device (55) being operator selectable.

3. A machine according to claim 1 or claim 2 **characterised in that** the working arm (18) is pivotally mounted at an inner end, to a frame (F) of the machine (10), for movement relative to the frame (10) by a hydraulic actuator (19), and the working arm (18) includes a plurality of relatively moveable parts (18a,18b) which are relatively movable by one or more further hydraulic actuators (17), and the machine (10) including a working implement (20) mounted at an outer end of the working arm (18) and being moveable relative to the working arm (18) by one or more yet further hydraulic actuators (21), one of the hydraulic actuators (17,19,21) being the at least one actuator controlled by the manually operable control device (50,51,52) provided by the hub structure (33) of the control apparatus (32).

4. A machine according to claim 3 **characterised in that** the hub structure (33) provides a plurality of manually operable control devices (50,51,52) each of which is operable when actuated to provide a signal to the controller (C) which responds by operating a respective hydraulic control valve (V,V₂,V₃) which then provides pressurised hydraulic fluid to a respective hydraulic actuator (17,19,21) of the working arm (18) and working implement (20), the functions of the plurality of the manually operable control devices (50,51,52) being re-eonfigurable to control alternative actuators (17,19,21).

5. A machine according to any one of the preceding claims **characterised in that** the or each manually operable control device (50,51,52) provided by the hub structure (33) is operable by the operator's fingers and/or hand whilst the operator is holding the outer rim part (34) of the steering wheel (32), and the hub structure (33) includes additional control devices (R,N,D) which to operate, require the operator to release the outer part (34) of the steering wheel (32).

6. A machine according to any one of the preceding claims **characterised in that** the steering wheel (32) includes a single continuous outer rim part (34) which is circular or substantially circular, and at least one radially extending member (35) which connects the outer part (34) to a centre part (36) which is operatively connected to the steering column (39) of the machine (10)

7. A machine according to any one of the preceding claims **characterised in that** the steering column (39) is mechanically operatively connected to a steering actuator which via direct mechanical transmission, effects steering of wheels (13) of the ground engaging structure (13,14) when the steering wheel (32) is rotated.

8. A machine according to claim 6 **characterised in that** the steering column (39) extends to a hydraulic valve (H) which provides pressurised hydraulic fluid to one or more hydraulic actuators to effect steering.

9. A machine according to any one of the preceding claims **characterised in that** the steering device (32) includes a sun gear (29) carried fast with the steering column (39), and a centre part (36) of the steering wheel (32) includes a ring gear (38) which when rotated, turns the sun gear (29) and hence the steering column (39), by rotating one or more planet gears (37) which are provided between and mesh with the sun (29) and ring (38) gears.

10. A machine according to any one of the preceding claims **characterised in that** the hub structure (33) includes an axially outer part (34) which lies substantially alongside the circumferentially extending outer rim part (34) of the steering wheel (32), and an axially inner part (43) which is affixed to the mounting (31) of the control apparatus (30), with the centre part (36) of the steering wheel (32) between the axially inner (43) and outer (44) hub parts, and the axially inner hub structure part (43) being configured such that one or more control devices (50,51,52) provided on the axially inner hub part (43), are closely adjacent to the circumferentially extending rotatable outer steering wheel rim part (34).

11. A machine according to any one of the preceding claims **characterised in that** the steering wheel (32) includes a manually engageable spinner device (60) which is useable to rotate the steering wheel (32) as an alternative to the operator holding and rotating the outer rim part (34) of the steering wheel (32), the spinner device (60) including a manually graspable part (61) which is relatively rotatable to the steering wheel (32) about a spinner axis parallel (B) to but spaced from the axis of rotation (A) of the steering wheel (32).

12. A machine according to claim 11 **characterised in that** the spinner device (60) includes at least one spinner mounted manually operable auxiliary service control device (63,64) for controlling a remote function.

13. A machine according to claim 12 **characterised in that** the spinner device (40) is dismountable from the remainder of the steering wheel (32) and the steering wheel (32) provides an alternative mounting position (P) for the spinner device (60).

14. A machine according to claim 12 or claim 13 **characterised in that** the spinner device (60) includes a wireless transmission function for transmitting signals to the controller (C) when the manually operable auxiliary service control device (63,64) is actuated, whereby the remote service is controllable without being electrically connected to the spinner mounted operator control device or devices (63, 64).

15. A machine according to any one of the preceding claims **characterised in that** the manually operable control device or devices (50,51, 52) provided by the hub structure (33) when actuated, signal the controller (C) via a wireless transmission function to control the or a respect hydraulic actuator (17,19,21).

## Patentansprüche

1. Arbeitsmaschine (10), die einen lenkbaren, motorisch betriebenen, in den Boden eingreifenden Aufbau (13, 14) und eine Steuervorrichtung (30) einschließt, die eine Anbringung (31), eine Lenkvorrichtung (32) zum Vorsehen einer Lenkung für den in den Boden eingreifenden Aufbau (13, 14) einschließt, wobei die Lenkvorrichtung (32) ein Lenkrad beinhaltet, das ein äußeres Randteil (34) einschließt, das relativ zur Anbringung (31) innerhalb einer Drehhülle um eine Achse (A) drehbar ist, um eine Lenksäule (39) zu drehen, die koaxial oder im Wesentlichen koaxial mit der Drehachse des Lenkrads (32) ist, wobei die Lenksäule (39) operativ mit dem in den Boden eingreifenden Aufbau (13, 14) verbunden ist, um das Lenken der Maschine (10) beim Drehen zu bewirkten, und wobei die Steuervorrichtung (30) weiterhin einen Nabenaufbau (33) einschließt, der sich innerhalb oder im Wesentlichen innerhalb der Drehhülle des äußeren Randteils (34) des Lenkrads (32) befindet, **gekennzeichnet durch** einen mit einem hydraulischen Aktuator betätigten Arbeitsarm (18) zum Durchführen von Arbeitsvorgängen, eine manuell bedienbare Steuervorrichtung (50, 51, 52) zum Steuern der Betätigung eines hydraulischen Steuerventils (V, V₂, V₃), das im Gebrauch dem zumindest einen Aktuator (17, 19, 21) selektiv druckbeaufschlagte Hydraulikflüssigkeit zuführt, um den Arbeitsarm (18) zu betätigen, und eine Steuerung (C), wobei der Nabenaufbau (33) relativ zur Anbringung (31) befestigt ist und die manuell bedienbare Steuervorrichtung (50, 51, 52) vom Nabenaufbau (33) bereitgestellt wird und im Gebrauch, wenn sie betätigt wird, ein Signal an die Steuerung (C) liefert, die **durch** Betätigen des hydraulischen Steuerventils (V, V₂, V₃) reagiert.

2. Maschine nach Anspruch 1, **dadurch gekennzeichnet, dass** der Nabenaufbau eine Anzeigevorrichtung (55) zum Anzeigen des Betriebsstatus einer Punktion der Maschine (10) einschließt, wobei die von der Anzeigevorrichtung (55) angezeigte Information vom Maschinenführer ausgewählt werden kann.

3. Maschine nach Anspruch 1 oder Anspruch 2, **dadurch gekennzeichnet, dass** der Arbeitsarm (18) schwenkbar an einem inneren Ende an einem Rahmen (F) der Maschine (10) zur Bewegung relativ zum Rahmen (10) durch einen hydraulischen Aktuator (19) angebracht ist und der Arbeitsarm (18) mehrere relativ bewegliche Teile (18a, 18b) einschließt, die durch einen oder mehrere weitere hydraulische Aktuatoren (17) bewegt werden können, und wobei die Maschine (10) ein Arbeitsgerät (20) einschließt, das am äußeren Ende des Arbeitsarms (18) angebracht und relativ zum Arbeitsarm (18) durch einen oder mehrere noch weitere hydraulische Aktuatoren (21) bewegt werden kann, wobei einer der hydraulischen Aktuatoren (17, 19, 21) der zumindest eine Aktuator ist, der von der manuell bedienbaren Steuervorrichtung (50, 51, 52) gesteuert wird, die vom Nabenaufbau (33) der Steuervorrichtung (32) bereitgestellt wird.

4. Maschine nach Anspruch 3, **dadurch gekennzeichnet, dass** der Nabenaufbau (33) mehrere manuell bedienbare Steuervorrichtungen (50, 51, 52) bereitstellt, von denen jede, wenn sie betätigt wird, dazu bedienbar ist, ein Signal an die Steuerung (C) zu liefern, die durch Betätigen eines jeweiligen hydraulischen Steuerventils (V, V₂, V₃) reagiert, das dann druckbeaufschlagte Hydraulikflüssigkeit an einen jeweiligen hydraulischen Aktuator (17, 19, 21) des Arbeitsarms (18) und Arbeitsgeräts (20) liefert, wobei die Funktionen der mehreren manuell bedienbaren Steuervorrichtungen (50, 51, 52) rekonfigurierbar sind, um alternative Aktuatoren (17, 19, 21) zu steuern.

5. Maschine nach irgendeinem der vorhergehenden Ansprüche, **dadurch gekennzeichnet, dass** die oder jede manuell bedienbare Steuervorrichtung (50, 51, 52), die vom Nabenaufbau (33) bereitgestellt wird, von den Fingern und/oder der Hand des Maschinenführers betätigt werden kann, während der Maschinenführer den äußeren Randteil (34) des Lenkrads (32) hält, und der Nabenaufbau (33) zusätzliche Steuervorrichtungen (R, N, D) einschließt, deren Betätigung es erfordert, dass der Maschinenführer den Außenteil (34) des Lenkrads (32) loslässt.

6. Maschine nach irgendeinem der vorhergehenden Ansprüche, **dadurch gekennzeichnet, dass** das Lenkrad (32) ein einzelnes kontinuierliches äußeres Randteil (34) einschließt, das kreisförmig oder im Wesentlichen kreisförmig ist, und zumindest ein sich radial erstreckendes Element (35), das das äußere Teil (34) mit einem Mittelteil (36) verbindet, das mit der Lenksäule (39) der Maschine (10) operativ verbunden ist.

7. Maschine nach irgendeinem der vorhergehenden Ansprüche, **dadurch gekennzeichnet, dass** die Lenksäule (39) mechanisch mit einem Lenkaktuator operativ verbunden ist, der über ein mechanisches Getriebe das Lenken von Rädern (13) des in den Boden eingreifenden Aufbaus (13, 14) bewirkt, wenn das Lenkrad (32) gedreht wird.

8. Maschine nach Anspruch 6, **dadurch gekennzeichnet, dass** die Lenksäule (39) sich zu einem hydraulischen Ventil (H) erstreckt, das einem oder mehreren hydraulischen Aktuatoren druckbeaufschlagte hydraulische Flüssigkeit zum Bewirken des Lenkens zuführt.

9. Maschine nach irgendeinem der vorhergehenden Ansprüche, **dadurch gekennzeichnet, dass** die Lenkvorrichtung (32) ein Sonnenrad (29) einschließt, das von der Lanksäule (39) fest getragen ist, und ein Mittelteil (36) des Lenkrads (32) ein Hohlrad (38) einschließt, das, wenn es gedreht wird, das Sonnenrad (29) und damit die Lenksäule (39) dreht, indem es eines oder mehrere Planetenräder (37), die zwischen dem Sonnen- (29) und den Hohl- (38) Rädern vorgesehen sind, dreht und mit ihnen im Eingriff ist.

10. Maschine nach irgendeinem der vorhergehenden Ansprüche, **dadurch gekennzeichnet, dass** der Nabenaufbau (33) ein axial äußeres Teil (34), das im Wesentlichen längs des sich in Umfangsrichtung erstreckenden äußeren Randteils (34) des Lenkrads (32) liegt, und ein axial inneres Teil (43) einschließt, das an der Anbringung (31) der Steuervorrichtung (30) befestigt ist, wobei das Mittelteil (36) des Lenkrads (32) zwischen dem axial inneren (43) und äußeren (44) Nabenteil liegt, und das axial innere Nabenaufbauteil (43) so konfiguriert ist, dass eine oder mehrere Steuervorrichtungen (50, 51, 52), die auf dem axial inneren Nabenteil (43) vorgesehen sind, sich nahe neben dem sich in Umfangsrichtung erstreckenden, drehbaren äußeren Lenkradrandteil (34) befinden.

11. Maschine nach irgendeinem der vorhergehenden Ansprüche, **dadurch gekennzeichnet, dass** das Lenkrad (32) eine manuell einrückbare Kreiselvorrichtung (60) einschließt, die dazu benutzt werden kann, das Lenkrad (32) als eine Alternative zum Halten und Drehen des äußeren Randteils (34) des Lenkrads (32) durch den Maschinenführer zu drehen, wobei die Kreiselvorrichtung (60) ein manuell fassbares Teil (61) einschließt, das relativ zum Lenkrad (32) um eine Kreiselachse (B) gedreht werden kann, die parallel zu, aber von der Drehachse (A) des Lenkrads (32) beabstandet ist.

12. Maschine nach Anspruch 11, **dadurch gekennzeichnet, dass** die Kreiselvorrichtung (60) zumindest einen Kreisel einschließt, an dem eine manuell bedienbare Hilfsdienst-Steuervorrichtung (63, 64) zum Steuern einer Fernfunktion angebracht ist.

13. Maschine nach Anspruch 12, **dadurch gekennzeichnet, dass** die Kreiselvorrichtung (40) vom Rest des Lenkrads (32) abnehmbar ist und das Lenkrad (32) eine alternative Anbringungsposition (P) für die Kreiselvorrichtung (60) bereitstellt.

14. Maschine nach Anspruch 12 oder Anspruch 13, **dadurch gekennzeichnet, dass** die Kreiselvorrichtung (60) eine drahtlose Übertragungsfunktion zum Übertragen von Signalen an die Steuerung (C) einschließt, wenn die manuell bedienbare Hilfsdienst-Steuervorrichtung (63, 64) betätigt wird, wodurch der Ferndienst steuerbar ist, ohne elektrisch mit der/den am Kreisel angebrachten Maschinenführer-Steuervorrichtung oder -vorrichtungen (63, 64) verbunden zu sein.

15. Maschine nach irgendeinem der vorhergehenden Ansprüche, **dadurch gekennzeichnet, dass** die manuell bedienbare Steuervorrichtung oder die manuell bedienbaren Steuervorrichtungen (50, 51, 52), die von dem Nabenaufbau (33) bereitgestellt werden, der Steuerung (C), wenn sie betätigt werden, über eine drahtlose Übertragungsfunktion signalisieren, den oder einen jeweiligen hydraulischen Aktuator (17, 19, 21) zu steuern.

## Revendications

1. Une machine de travail (10) comprenant une structure de binage orientable à moteur (13, 14) et un appareil de commande (30) comportant une monture (31) et un dispositif de direction (32) permettant de commander la direction de la structure de binage (13, 14), le dispositif de direction (32) comprenant un volant muni d'un bord extérieur (34) pouvant tourner par rapport à la monture (31), dans une enveloppe de rotation, sur un axe (A), afin de tourner la colonne de direction (39) qui est coaxiale ou sensiblement coaxiale avec l'axe de rotation du volant (32), la colonne de direction (39) étant opérationnellement connectée à la structure de binage (13, 14) pour diriger la machine (10) quand on la tourne et l'appareil de commande (30) comprenant également une structure de moyeu (33) se trouvant dans ou sensiblement dans l'enveloppe de rotation du bord extérieur (34) du volant (32), et **caractérisée par** un bras de travail commandé par un actionneur hydraulique (18) pour la réalisation des travaux, un dispositif de commande manuel (50, 51, 52) permettant de commander une vanne de commande hydraulique (V, V₂, V₃) qui, pendant l'utilisation, alimente sélectivement au moins un actionneur (17, 19, 21) en liquide hydraulique sous pression pour actionner le bras de travail (18) et un contrôleur (C), la structure de moyeu (33) étant fixe par rapport à la monture (31) et le dispositif de commande manuel (50, 51, 52) étant présent sur la structure de moyeu (33) et envoyant, lorsqu'il est actionné pendant l'utilisation, un signal au contrôleur (C) qui répond en actionnant la vanne de commande hydraulique (V, V₂, V₃).

2. Une machine conformément à la revendication 1, **caractérisée par le fait que** la structure de moyeu comporte un dispositif d'affichage (55) pour l'affichage de l'état opérationnel d'une fonction de la machine (10), les informatisons affichées sur le dispositif d'affichage (55) pouvant être sélectionnées par l'opérateur.

3. Une machine conformément à la revendication 1 ou 2, **caractérisée par le fait que** le bras de travail (18) est monté de manière pivotante à une extrémité intérieure, sur un bâti (F) de la machine (10), pour être actionné par rapport au bâti (10) par un actionneur hydraulique (19) et que le bras de travail (18) comporte plusieurs pièces relativement mobiles (18a, 18b) pouvant être relativement actionnées par un ou plusieurs actionneurs hydrauliques (17) et **par le fait que** la machine (10) comprend un outil de travail (20) monté à une extrémité extérieure du bras de travail (18) et pouvant être actionné par rapport au bras de travail (18) par un ou plusieurs actionneurs hydrauliques (21), un des actionneurs hydrauliques (17, 19, 21) représentant au moins un actionneur contrôlé par le dispositif de commande manuel (50, 51, 52) présent sur la structure de moyeu (33) de l'appareil de commande (32).

4. Une machine conformément à la revendication 3, **caractérisée par le fait que** la structure de moyeu (33) possède plusieurs dispositifs de commande manuels (50, 51, 52) pouvant chacun être utilisé pour envoyer un signal au contrôleur (C), lequel répond en actionnant une vanne de commande hydraulique respective (V, V₂, V₃) qui alimente ensuite en liquide hydraulique sous pression un actionneur hydraulique respectif (17, 19, 21) du bras de travail (18) et de l'outil de travail (20), les fonctions des différents dispositifs de commande manuels (50, 51, 52) pouvant être reconfigurées de façon à commander d'autres actionneurs (17, 19, 21).

5. Une machine conformément à n'importe laquelle des revendications précédentes **caractérisée par le fait que** l'opérateur peut actionner chacun des dispositifs de commande manuels (50, 51, 52) présents sur la structure de moyeu (33) avec les doigts et/ou la main tout en tenant le bord extérieur (34) du volant (32) et que la structure de moyeu (33) comporte d'autres dispositifs de commande (R, N, D) que l'opérateur peut utiliser en lâchant le bord extérieur (34) du volant (32).

6. Une machine conformément à n'importe laquelle des revendications précédentes, **caractérisée par le fait que** le volant (32) comporte un bord extérieur continu (34) qui est circulaire ou sensiblement circulaire, et au moins un membre radial (35) reliant la partie extérieure (34) à une partie centrale (36) connectée opérationnellement à la colonne de direction (39) de la machine (10).

7. Une machine conformément à n'importe laquelle des revendications précédentes, **caractérisée par le fait que** la colonne de direction (39) est mécaniquement et opérationnellement connectée à un actionneur de direction qui, par transmission mélanique directe, commande les roues (13) de la structure de binage (13, 14) lorsque l'on tourne le volant (32).

8. Une machine conformément à la revendication 6, **caractérisée par le fait que** la colonne de direction (39) rejoint une vanne hydraulique (H) qui alimente en liquide hydraulique sous pression un ou plusieurs actionneurs hydrauliques afin de commander la direction.

9. Une machine conformément à n'importe laquelle des revendications précédentes, **caractérisée par le fait que** le dispositif de direction (32) comporte une roue solaire (29) portée avec la colonne de direction (39) et qu'une partie centrale (36) du volant (32) est munie d'une couronne dentée (38) qui, quand on la fait tourner, fait tourner la roue solaire (29) et, par conséquent la colonne de direction (39), en faisant tourner une ou plusieurs roues planétaires (37) se trouvant entre la roue solaire (29) et la couronne dentée (38) et s'engrenant avec elles.

10. Une machine conformément à n'importe laquelle des revendications précédentes, **caractérisée par le fait que** la structure de moyeu (33) comporte une partie extérieure axiale (34) se trouvant sensiblement le long du bord extérieur circonférentiel (34) du volant (32) et une partie intérieure axiale (43) fixée sur la monture (31) de l'appareil de commande (30), la partie centrale (36) du volant (32) se trouvant entre les parties du moyeu axiales intérieure (43) et extérieure (44), et la partie de la structure de moyeu intérieure axiale (43) étant configurée de manière telle qu'un ou plusieurs dispositifs de commande (50, 51, 52) présents sur la partie du moyeu intérieure axiale (43) sont étroitement adjacents au bord du volant extérieur rotatif circonférentiel (34).

11. Une machine conformément à n'importe laquelle des revendications précédentes, **caractérisée par le fait que** le volant (32) comporte un dispositif de rotation enclenchable manuellement (60) pouvant être utilisé pour faire tourner le volant (32) sans que l'opérateur ait besoin de tenir et de faire tourner le bord extérieur (34) du volant (32), le dispositif de rotation (60) comprenant une pièce pouvant être saisie manuellement (61) relativement rotative par rapport au volant (32) sur un axe de rotation (B) parallèle à mais éloigné de l'axe de rotation (A) du volant (32).

12. Une machine conformément à la revendication 11, **caractérisée par le fait que** le dispositif de rotation (60) comporte au moins un dispositif de commande auxiliaire actionnable manuellement et monté sur le dispositif de rotation (63, 64) pour commander une fonction à distance.

13. Une machine conformément à la revendication 12, **caractérisée par le fait que** le dispositif de rotation (40) peut être démonté du reste du volant (32) et que le volant (32) fournit une autre position de montage (P) pour le dispositif de rotation (60).

14. Une machine conformément à la revendication 12 ou 13, **caractérisée par le fait que** le dispositif de rotation (60) comporte une fonction de transmission sans fil pour l'envoi de signaux au contrôleur (C) lorsque le dispositif de commande auxiliaire actionnable manuellement (63, 64) est actionné, le service à distance pouvant donc être contrôlé sans être électriquement relié au ou aux dispositifs de commande de l'opérateur montés sur le dispositif de rotation (63, 64).

15. Une machine conformément à n'importe laquelle des revendications précédentes, **caractérisée par le fait que** le ou les dispositifs de commande actionnables manuellement (50, 51, 52) présents sur la structure de moyeu (33) envoient, lorsqu'ils sont actionnés, un signal au contrôleur (C) par transmission sans fil afin de commander le ou un actionneur hydraulique respectif (17, 19, 21).
